# EUROPEAN PATENT APPLICATION

(11) **EP 1 145 798 A2**
(43) Date of publication of application: **17.10.2001**
(21) Application number: 01303436.8
(22) Date of filing: 12.04.2001
(51) Int. Cl.: B23K 37/04, B23K 37/053

(54) **Clamping unit**

(30) Priority: 13.04.2000 GB 0009039
(71) Applicant: Glynwed Pipe Systems Limited, Coleshill, Birmingham B46 3BP (GB)
(72) Inventor: Wilkinson, Kevin, Durapipe S & LP, Bretfield Court, Dewsbury WF12 9DB (GB)
(74) Representative: Pawlyn, Anthony Neil

(57) **Abstract**

The invention provides an improved clamping unit particularly suitable for use in holding elements relative to one another during electrofusion operations. In particular the clamping unit includes a clamping unit including first clamping means and second clamping means connected to one another, at least one of said clamping means being provided by a first pivotally mounted arm and a second pivotally mounted arm, the spacing between first and second arms being variable, together with a third arm pivotally mounted on said first arm and a fourth arm pivotally mounted on said second arm, said third and fourth arms being connected by a pivot, movement of said pivot away from said pivotal mounting of said first arm and / or said pivotal mounting of said second arm decreasing the gap between the said first and said second arms.

## Description

This invention concerns improvements in and relating to clamping, particularly but not exclusively of components during electrofusion welding and similar processes.

During electrofusion welding of components it is necessary to clamp those components rigidly in position relative to one another. Movement of the components relative to each other and / or relative to the coupling during the welding process gives rise to a potentially poorer quality weld.

A number of systems for clamping such components together are known, but they face a number of significant problems.

In one type of clamp, a split ring is provided to surround the pipe. Pipes of different sizes are accommodated by placing within the ring curved liners of different effective diameters. Clamping is affected by a G-clamp style arrangement attached to the exterior of the rings.

In another type of clamping arrangement the clamp is placed under the pipe and the pipe is rested in the framework. Flexible straps are then introduced around the top of the pipe and clamped to the framework using tensioning fittings.

These systems, and other clamping systems, are problematical in that they require access to the underside of the pipe after the clamping process has been completed. As a consequence a wider trench to receive the pipe must be dug and time consuming manouvring of the clamp out from under the pipe is involved once the process has been completed. A number of the prior art clamps also face problems in that they consist of a number of separate components which can be lost or misplaced on site and which generally complicate the handling of the system.

Amongst the aims of the present invention are to provide a flexible clamping system which principally requires access from above the pipe after clamping. It is also amongst the aims of the invention to provide a lightweight, relatively inexpensive clamp which is quick to introduce and remove and which comes as an integral unit.

According to a first aspect of the invention we provide a clamping unit including first clamping means and second clamping means connected to one another, at least one of said clamping means being provided by a first pivotally mounted arm and a second pivotally mounted arm, the spacing between first and second arms being variable, together with a third arm pivotally mounted on said first arm and a fourth arm pivotally mounted on said second arm, said third and fourth arms being connected by a pivot, movement of said pivot away from said pivotal mounting of said first arm and / or said pivotal mounting of said second arm decreasing the gap between the said first and said second arms.

The clamping unit is preferably adapted to clamp a first element relative to a second element. A coupling for the first and second element may be provided. A clamping unit is particularly suited to clamping one pipe relative to another during electrofusion welding. The first and second clamping means are preferably both provided according to the structure defined in the first aspect. The first and second clamping means may be identical to one another.

The first and / or second clamping means are preferably connected by a body element. One or both of the first and second clamping units may be moveable relative to one another on the body element. A sliding movement is preferred. In this way, the separation between the clamping units can be varied. Preferably releasable fastening means are provided to fix the position of one or both of the first and second clamping units relative to one another and / or relative to a body element.

The first and / or second arms may be pivotally mounted on the body element, but are preferably mounted on a mounting unit. The mounting unit may be moveable on or relative to the body element. The first and second arms may have separate pivotal mountings, preferably a common pivotal mounting is provided.

The first and / or second arms may be provided with a linear portion between the pivotal mounting and the pivotal mounting for the third or fourth arms respectively. The first and / or second arm may be provided with a non-linear, preferably curved, portion beyond the pivot for the third and / or fourth arm portion. Preferably the non-linear portions tend towards one another at their ends. The end of the first or second arms may be provided with item / element engaging portions. Preferably the engaging portions are in opposition to one another. The item engaging portions may be profiled to the corresponding portion of the item.

Preferably the spacing between the first and second arms is variable to clamp and release items. The variability is preferably provided at the distal part of the arms relative to the pivotal mounting therefor.

Preferably the pivotal mounting for the third arm on the first arm and / or the fourth arm on the second arm is provided intermediate to the pivotal mounting for the first / second arm and the end thereof. The third / fourth arm pivots may be provided at equivalent positions on the first and second arms.

The third and / or fourth arms may be linear in part or throughout.

Preferably the pivotal connection of the third to the fourth arm is provided intermediate their mounting on the first / second arms and their ends. Preferably the third and fourth arms extend beyond their pivotal connection. The extension is preferably generally into the space between the first and second arms. The end of the third and / or fourth arms may be provided with item / element engaging portions. Preferably the item engaging portions are in opposition to one another. The item engaging portions may be profiled to the corresponding portion of the item to be clamped.

Preferably the third / fourth arm connecting pivot is aligned with the first and second arm pivotal mountings.

A third and / or fourth arm may be directly mounted on the first / second arms respectively or may be mounted on elements provided on those arms. The third and fourth arms may be directly connected by a pivot or indirectly via pivotal mountings on a further element.

Preferably means are provided to move the third and fourth arm pivot relative to the first and / or second arm pivotal mountings. The means are preferably adjustable. Preferably the means restrain movement of the first and / or second and / or third and / or fourth arms relative to the set position. The means may engage the third and fourth arm pivotal connection and the body element and / or the third and fourth arm pivotal connection and the first and / or second arm pivotal mounting. The means may engage the first and second arms and / or the third and fourth arms and / or the pivotal mounting for the third arm or the first arm and the fourth arm or the second arm. The means preferably vary the distance between its mounting points. Preferably the distance between the third and fourth arm pivot and the first and / or second arm pivotal mounting and / or the distance between the third arm on first arm and fourth arm on second arm pivotal mounting is varied. Preferably adjustment of the means so as to bring the first and second arms to a reduced separation also brings the third and fourth arms to a reduced separation, and most preferably the ends thereof. Preferably all four arms are brought to a position engaging the profile of the item by the adjustable means.

The first clamping means may be provided parallel to the second clamping means and / or at an angle thereto. The angle of alignment is preferably adjustable. Preferably the first clamping means and second clamping means can be fixed in position relative to one another at a variety of angles.

The ratio of the first arm pivotal mounting to pivotal mounting of the third arm on the first arm, to the distance between the pivotal mounting and the third arm on the first arm and the pivot connection of the third and fourth arms may be between 1.2 : 1 and 1 : 1.2. The ratio of the distance between the pivotal mounting of the second arm and the pivotal connection of the fourth arm to the second arm relative to the distance between the pivotal mounting of the fourth arm on the second arm and the pivotal connection of the fourth arm to the third arm may be the same or different to this measurement. Preferably linear distances are considered.

The ratio of the separation of the pivotal mounting for the first arm to the pivotal connection of the third arm to the first arm relative to the distance between the pivotal connection of the third arm to the first arm and the end of the first arm may be between 1 : 2 and 1 : 5. The same ratios may apply to the distance between the second arm pivotal mounting and the pivotal connection of the fourth arm to the second arm relative to the distance between the pivotal mounting for the fourth arm on the second arm and the end of the second arm or different ratios may apply.

Preferably the minimum separation between the pivotal connection of the third and fourth arms and the pivotal mounting for the first and / or second arms is between 0.75 and 0.10, and more preferably between 0.60 and 0.25 the maximum separation between the pivotal connection of the third and fourth arms and the pivotal mounting for the first and / or second arm.

Preferably the minimum separation between the ends of the first and second arms is between 0.8 and 0.05, and more preferably between 0.5 and 0.15 the maximum separation between the ends of the first and second arms.

Preferably the minimum separation between the ends of the third and fourth arms is between 0.95 and 0.5, and more preferably between 0.9 and 0.6 the maximum separation between the ends of the third and fourth arms.

The ratio of the distance between the pivotal mounting of the third arm on the first arm to the pivotal connection of the third and fourth arms relative to the distance between the pivotal connection of the third to fourth arms and end of the third arm may be between 2.0 : 0.1 and 0.95 : 1. Preferably the equivalent ratios for the fourth arm are the same.

Various embodiments of the invention will now be described, by way of example only, and with reference to the accompanying drawings in which:-
Figure 1 schematically illustrates the clamping components of the present invention in the released state;
Figure 2 illustrates the clamping component of a device according to the present invention in the clamping position; and
Figure 3 illustrates a first system for adjusting the position of the clamping mechanism.

The clamping components of the present invention consist of a first arm 2 and second arm 4 pivotally mounted together at junction 6. The arms 2 and 4 are mirror images of one another and consist of straight portions 8 and 10 respectively extending from the pivot 6 to secondary pivots 12 and 14 respectively. Curved portions 16 and 18 respectively extend from the pivots 12, 14 away from the primary pivot 6. The end portions 20, 22 of the curved arm 16, 18 curved inwards towards one another and end in pipe contacting elements 24, 26. The pivotal mountings 12, 14 on the arms 2, 4 pivotally mount straight arms 28, 30 which extend towards one another and cross and are pivotally mounted at central pivotal mounting 32. The end portions 34, 36 of the arms 28, 30 carry further pipe contacting portions 38, 40.

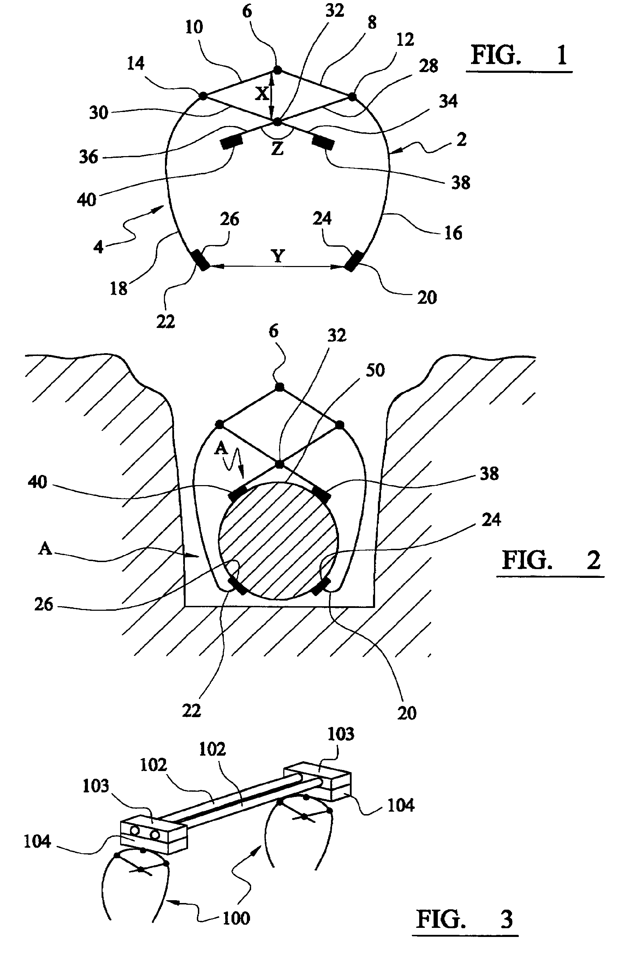

As illustrated in Figure 1 with the distance X between pivotal locations 6 and 32 reduced, the spacing Y between the pipe contacting portions 24, 26 is relatively large and the angle Z between arm portions 34, 36 is relatively high with a consequentially great separation between pipe contacting portions 38, 40.

In the position illustrated in Figure 1, the clamping unit can be introduced down into a trench containing a pipe for clamping.

As shown in Figure 2 the pipe contacting portions 38, 40 rest on the top surface of the pipe 50. Increasing the separation of pivotal points 6 and 32 causes the pipe contacting portions 24, 26 to swing inwards on the underside of the pipe into a contacting position. The relative directions of the components are shown by the movement arrows A in Figure 2.

As can be seen in Figure 2 introduction and removal of the clamp, which is the reverse of the process described above, can be affected within the tight confines of the trench where walls 52, 54 and based 56 of the trench restricts movement.

The clamping unit of Figures 1 and 2 is provided as part of a pair with a similar clamping unit which engages the other component for the electrofusion process.

As illustrated in Figure 3 the two clamping units 100 are connected by transverse bars 102 via mounting blocks 103. Each of the blocks can be rotated to accommodate non-linear lengths of pipe which need clamping and the block 103 can be slid up and down the transverse bars so as to reduce the longitudinal separation between the two clamping units. In this way a versatile clamping tool is provided.

The one embodiment, not shown, the spacing X between pivotal points 6 and 32 is adjusted via a threaded element which fixedly engages the block which provides the pivotal mounting 32 for arms 28 and 30. A threaded engagement between the element and the block which provides the pivotal mounting point 6 for arms 2 and 4 is provided. As a consequence of this arrangement, rotation of the screw threaded element increases and decreases the separation X depending upon the direction of rotation of the threaded element. A handle element is provided on the top portion of the clamp to facilitate this rotation.

In another alternative embodiment, not shown, a fixed handle portion is provided in opposition to a moveable handle. Squeezing the handle towards the fixed handle advances rod through the block and pushes the block and its pivotal mounting 32 away from pivotal mounting 6 thereby increasing separation X. A ratchet mechanism is provided such that upon release of the handle the separation X is maintained at the level set. Further squeezing of the handle towards the fixed handle increases the distance X. To release distance X the ratchet is manually released whereupon the spring loaded rod is advanced backwards thus opening the clamp.

## Claims

1. A clamping unit including first clamping means and second clamping means connected to one another, at least one of said clamping means being provided by a first pivotally mounted arm and a second pivotally mounted arm, the spacing between first and second arms being variable, together with a third arm pivotally mounted on said first arm and a fourth arm pivotally mounted on said second arm, said third and fourth arms being connected by a pivot, movement of said pivot away from said pivotal mounting of said first arm and / or said pivotal mounting of said second arm decreasing the gap between the said first and said second arms.

2. A clamping unit according to claim 1 in which the clamping unit is adapted to clamp a first element relative to a second element.

3. A clamping unit according to claim 1 or claim 2 in which the first and / or second clamping means are connected by a body element and one or both of the first and second clamping units are moveable relative to one another on the body element.

4. A clamping unit according to any preceding claim in which the first and / or second arms are pivotally mounted on a mounting unit.

5. A clamping unit according to any preceding claim in which the first and / or second arms are provided with a linear portion between the pivotal mounting and the pivotal mounting for the third or fourth arms respectively.

6. A clamping unit according to any preceding claim in which the first and / or second arm are provided with a non-linear, preferably curved, portion beyond the pivot for the third and / or fourth arm portion.

7. A clamping unit according to any preceding claim in which the end of the first or second arms are provided with item / element engaging portions, the engaging portions being in opposition to one another.

8. A clamping unit according to any preceding claim in which the spacing between the first and second arms is variable to clamp and release items, the variability being provided at the distal part of the arms relative to the pivotal mounting therefor.

9. A clamping unit according to any preceding claim in which the pivotal mounting for the third arm on the first arm and / or the fourth arm on the second arm is provided intermediate to the pivotal mounting for the first / second arm and the end thereof.

10. A clamping unit according to claim 9 in which the third / fourth arm pivots are provided at equivalent positions on the first and second arms.

11. A clamping unit according to any preceding claim in which the pivotal connection of the third to the fourth arm is provided intermediate their mounting on the first / second arms and their ends.

12. A clamping unit according to any preceding claim in which the end of the third and / or fourth arms are provided with item / element engaging portions, the item engaging portions are in opposition to one another.

13. A clamping unit according to any preceding claim in which means are provided to move the third and fourth arm pivot relative to the first and / or second arm pivotal mountings in an adjustable manner.

14. A clamping unit according to claim 13 in which the means restrain movement of the first and / or second and / or third and / or fourth arms relative to the set position.

15. A clamping unit according to claim 13 or claim 14 in which the means engage the third and fourth arm pivotal connection and the body element and / or the third and fourth arm pivotal connection and the first and / or second arm pivotal mounting.

16. A clamping unit according to claim 13 or claim 14 in which the means engage the first and second arms and / or the third and fourth arms and / or the pivotal mounting for the third arm or the first arm and the fourth arm or the second arm.

17. A clamping unit according to any of claims 13 to 16 in which the distance between the third and fourth arm pivot and the first and / or second arm pivotal mounting and / or the distance between the third arm on first arm and fourth arm on second arm pivotal mounting is varied using the means.

18. A clamping unit according to any of claims 13 to 17 in which adjustment of the means so as to bring the first and second arms to a reduced separation also brings the third and fourth arms to a reduced separation.

19. A clamping unit according to any preceding claim in which the first clamping means and second clamping means can be fixed in position relative to one another at a variety of angles.
